# EUROPEAN PATENT APPLICATION

(11) **EP 4 456 099 A1**
(43) Date of publication of application: **30.10.2024**
(21) Application number: 22910488.0
(22) Date of filing: 20.09.2022
(51) Int. Cl.: H01G 9/00, C08G 61/12, C08L 65/00, C08L 79/00, H01G 9/028

(54) **METHOD FOR PRODUCING POLYMER DISPERSION FOR SOLID ELECTROLYTIC CAPACITOR, AND METHOD FOR PRODUCING SOLID ELECTROLYTIC CAPACITOR**

(30) Priority: 21.12.2021 JP 2021207275
(71) Applicant: Resonac Corporation, Tokyo 105-7325 (JP)
(72) Inventor: YAMADA, Hiroki, Tokyo 105-7325 (JP); FUJITA, Miyo, Tokyo 105-7325 (JP); OKUBO, Takashi, Tokyo 105-7325 (JP)
(74) Representative: Strehl Schübel-Hopf & Partner
(86) International application number: PCT/JP2022/034952
(87) International publication number: WO 2023/119762

(57) **Abstract**

Provided are a method for producing a polymer dispersion for a solid electrolytic capacitor which enables production of a solid electrolytic capacitor having a large capacitance and a low equivalent series resistance, and a method for producing a solid electrolytic capacitor using the polymer dispersion. The method for producing a polymer dispersion for a solid electrolytic capacitor according to the present invention includes a step (1) of polymerizing a monomer as a constitutional unit of a conjugated conductive polymer in a liquid containing at least one of a seed particle with protective colloid formed of a polyanion and a polyanion to obtain a polymer-containing liquid; a step (2) of performing a first dispersion treatment on the polymer-containing liquid to obtain a dispersion (a); and a step (3) of adding an electric conductivity improver to the dispersion (a), and performing a second dispersion treatment to obtain a dispersion (b).

## Description

### Technical Field

The present invention relates to a method for producing a dispersion containing a conjugated conductive polymer for a solid electrolytic capacitor, and a method for producing a solid electrolytic capacitor.

### Background Art

Electrolytic capacitors usually have a configuration in which a valve metal such as aluminum, tantalum, or niobium is included as an anode foil and a cathode foil, and an electrolyte is interposed between the anode foil and the cathode foil. To increase the capacitance, the surface area of the valve metal for the anode foil is increased by an etching process or the like, and a dielectric oxide film is formed on the surface of the valve metal.

Since the equivalent series resistance (ESR) can be reduced, use of solid electrolytic capacitors including a solid electrolyte containing a conductive polymer such as polypyrrole, polyaniline, or polythiophene is increasing, for example.

One of known methods of forming a solid electrolyte containing a conductive polymer is a method of forming a solid electrolyte by impregnating an electrolytic capacitor element with a monomer liquid for obtaining a conductive polymer and an oxidant solution, and performing oxidation polymerization or electrolysis polymerization within the electrolytic capacitor element (for example, see PTL1).

A method of forming a solid electrolyte by a wet process is also known, in which a dielectric oxide film for an anode body is impregnated with an aqueous dispersion of conductive polymer particles. For example, PTL2 discloses a solid electrolytic capacitor having a large capacitance and a low ESR which is obtained by forming aggregates of a conductive polymer in a dispersion into nanoparticles by ultrasonic irradiation and dispersing the nanoparticles.

### Citation List

### Patent Literature

PTL1: JP 2005-123630 A
PTL2: JP 2013-55308 A

### Summary of Invention

### Technical Problem

However, the conductive polymer is formed in an aggregated spongy state by the polymerization reaction within the electrolytic capacitor element as described in PTL1. Thus, the solid electrolyte has poor uniformity, and the conductivity is likely to be reduced.

Recently, production into in-vehicle electrical components has been progressed, higher output in electronic control has been demanded, and a further improvement in capacitance and a reduction in ESR have been desired for capacitors in electronic control units for vehicles. However, it cannot be said that a solid electrolytic capacitor produced using a dispersion of conductive polymer nanoparticles as described in PTL2 does not always have satisfactory capacitance and ESR.

The present invention has been made in consideration of such circumstances, and an object of the present invention is to provide a method for producing a polymer dispersion for a solid electrolytic capacitor which enables production of a solid electrolytic capacitor having a large capacitance and a low ESR, and a method for producing a solid electrolytic capacitor using the polymer dispersion.

### Solution to Problem

The present invention is based on findings that by additionally performing a dispersion treatment in production of a polymer dispersion after an electric conductivity improver is added, a solid electrolytic capacitor produced using the polymer dispersion has an improved capacitance and a reduced ESR.

The present invention provides the following means.
[1] A method for producing a polymer dispersion for a solid electrolytic capacitor, comprising: a step (1) of polymerizing a monomer as a constitutional unit of a conjugated conductive polymer in a liquid containing at least one of a seed particle with protective colloid formed of a polyanion and a polyanion to obtain a polymer-containing liquid; a step (2) of performing a first dispersion treatment on the polymer-containing liquid to obtain a dispersion (a); and a step (3) of adding an electric conductivity improver to the dispersion (a), and performing a second dispersion treatment to obtain a dispersion (b).
[2] The method for producing a polymer dispersion for a solid electrolytic capacitor according to [1], wherein the electric conductivity improver is one or more selected from the group consisting of tetrahydrofuran, γ-butyrolactone, N-methylformamide, N-methylpyrrolidone, ethylene glycol, propylene glycol, glycerol, diethylene glycol, triethylene glycol, dimethyl sulfoxide, and sorbitol.
[3] The method for producing a polymer dispersion for a solid electrolytic capacitor according to [1] or [2], wherein an amount of the electric conductivity improver added is 1 to 30 parts by mass per 1 part by mass of solids in the dispersion (a).
[4] The method for producing a polymer dispersion for a solid electrolytic capacitor according to any one of [1] to [3], wherein in the step (3), an alkaline compound is further added.
[5] The method for producing a polymer dispersion for a solid electrolytic capacitor according to [4], wherein the alkaline compound is one or more selected from the group consisting of morpholine, 4-ethylmorpholine, and 4-(2-hydroxyethyl)morpholine.
[6] The method for producing a polymer dispersion for a solid electrolytic capacitor according to any one of [1] to [5], wherein the monomer as the constitutional unit of the conjugated conductive polymer contains one or more compounds selected from the group consisting of pyrroles, anilines, and thiophenes.
[7] The method for producing a polymer dispersion for a solid electrolytic capacitor according to [6], wherein the thiophene compounds are represented by the following formula (1): 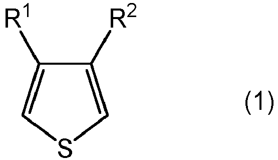 wherein R¹ and R² are each independently a hydrogen atom, a hydroxyl group, an alkyl group with 1 to 18 carbon atoms containing or not containing a substituent, an alkoxy group with 1 to 18 carbon atoms containing or not containing a substituent, an alkylthio group with 1 to 18 carbon atoms containing or not containing a substituent, or R² and R³ may bind to each other to form an alicycle with 3 to 10 carbon atoms containing or not containing a substituent, an aromatic ring with 6 to 10 carbon atoms containing or not containing a substituent, an oxygen atom-containing hetero ring with 2 to 10 carbon atoms containing or not containing a substituent, a sulfur atom-containing hetero ring with 2 to 10 carbon atoms containing or not containing a substituent, or a sulfur and oxygen atom-containing hetero ring with 2 to 10 carbon atoms containing or not containing a substituent.
[8] The method for producing a polymer dispersion for a solid electrolytic capacitor according to any one of [1] to [7], wherein the polyanion is a polymer having two or more groups composed of sulfonic acid or a salt thereof.
[9] The method for producing a polymer dispersion for a solid electrolytic capacitor according to any one of [1] to [8], wherein a proportion of an anionic group in the polyanion is from 0.25 to 30 mol based on 1 mol of the monomer as the constitutional unit of the conjugated conductive polymer.
[10] The method for producing a polymer dispersion for a solid electrolytic capacitor according to any one of [1] to [9], wherein in the step (1), the monomer as the constitutional unit of the conjugated conductive polymer is polymerized in a liquid containing water using an oxidant containing one or more selected from the group consisting of peroxodisulfuric acid and salts thereof.
[11] A method for producing a solid electrolytic capacitor, comprising: a step (4) of attaching the polymer dispersion for a solid electrolytic capacitor obtained by the method according to any one of [1] to [10] to a porous anode body made of a valve metal and having a dielectric film on a surface thereof; and a step (5) of removing the dispersion medium from the polymer dispersion for a solid electrolytic capacitor attached to the porous anode body to form a solid electrolyte layer.

### Advantageous Effects of Invention

The production method according to the present invention can produce a polymer dispersion for a solid electrolytic capacitor which enables production of a solid electrolytic capacitor having a large capacitance and a low ESR.

The present invention can also provide a method for producing a solid electrolytic capacitor having a large capacitance and a low ESR using the polymer dispersion.

### Description of Embodiments

First, definitions and meanings of terms and expressions in this specification are shown below.

The expression "protective colloid formed of a polyanion" in the expression "seed particle with protective colloid formed of a polyanion" indicates that the polyanion is coordinated with the seed particle to cover the surface of the seed particle.

The term "solids" indicates residues left after the water content in the liquid is evaporated, and the term "solids content" is measured by a measurement method according to Examples.

The "plural form" after a compound name indicates a group of compounds having the structure of the compound and encompasses the compounds having a substituent. For example, pyrroles indicate a group of compounds having a pyrrole structure.

The term "(meth)acrylic acid" is a generic name for acrylic acid and methacrylic acid. Similarly, "(meth)acrylate" is a generic name for acrylate and methacrylate, and "(meth)acryloyl" is a generic name for acryloyl and methacryloyl.

### [Method for producing polymer dispersion for solid electrolytic capacitor]

The method for producing a polymer dispersion for a solid electrolytic capacitor according to the present embodiment comprises a step (1) of polymerizing a monomer as a constitutional unit of a conjugated conductive polymer in a liquid containing at least one of a seed particle with protective colloid formed of a polyanion and a polyanion to obtain a polymer-containing liquid; a step (2) of performing a first dispersion treatment on the polymer-containing liquid to obtain a dispersion (a); and a step (3) of adding an electric conductivity improver to the dispersion (a), and performing a second dispersion treatment to obtain a dispersion (b).

Through not only the first dispersion treatment before addition of the electric conductivity improver but also the second dispersion treatment after addition thereof, a polymer dispersion suitable for forming a solid electrolyte for a solid electrolytic capacitor having a large capacitance and a low ESR can be produced.

### [Step (1)]

In the step (1) in the method for producing a polymer dispersion according to the present embodiment, a monomer as a constitutional unit of a conjugated conductive polymer is polymerized in a liquid containing at least one of a seed particle with protective colloid formed of a polyanion and a polyanion to obtain a polymer-containing liquid.

The polymer-containing liquid can contain, as polymers, a composite form of a conjugated conductive polymer and a seed particle with protective colloid formed of a polyanion, and/or a composite form of a conjugated conductive polymer and a polyanion.

### <Conjugated conductive polymer>

The polymer in the polymer dispersion and the polymer-containing liquid according to the present embodiment contains conjugated conductive polymers. The conjugated conductive polymers are any conjugated conductive polymers as long as they are an organic high-molecular-weight compound having a π-conjugated system in the main chain. These conjugated conductive polymers may be used alone or in combination. Alternatively, these conjugated conductive polymers may each be a homopolymer of a monomer as a constitutional unit of the conjugated conductive polymer described later, or may each be a copolymer as the constitutional unit of the conjugated conductive polymer, which is obtained by copolymerizing two or more monomers.

Examples of such conjugated conductive polymers include polypyrroles, polythiophenes, polyisothianaphthenes, polyacetylenes, polyphenylenes, polyphenylene vinylenes, polyanilines, polyacenes, polythiophene vinylenes, and copolymers thereof. Among these, polypyrroles, polythiophenes, and polyanilines are preferred, and polythiophenes are more preferred from the viewpoint of ease in handling and availability.

From the viewpoint of high conductivity, the conjugated conductive polymer preferably has a substituent such as an alkyl group, a carboxy group, a sulfo group, an alkoxy group, a hydroxyl group, or a cyano group.

Examples of the polypyrroles include polypyrrole, poly(N-methylpyrrole), poly(3-methylpyrrole), poly(3-ethylpyrrole), poly(3-n-propylpyrrole), poly(3-butylpyrrole), poly(3-octylpyrrole), poly(3-decylpyrrole), poly(3-dodecylpyrrole), poly(3,4-dimethylpyrrole), poly(3,4-dibutylpyrrole), poly(3-carboxypyrrole), poly(3-methyl-4-carboxypyrrole), poly(3-methyl-4-carboxyethylpyrrole), poly(3-methyl-4-carboxybutylpyrrole), poly(3-hydroxypyrrole), poly(3-methoxypyrrole), poly(3-ethoxypyrrole), poly(3-butoxypyrrole), poly(3-hexyloxypyrrole), poly(3-methyl-4-hexyloxypyrrole), and poly(3-methyl-4-hexyloxypyrrole).

Examples of the polythiophenes include polythiophene, poly(3-methylthiophene), poly(3-hexylthiophene), poly(3-heptylthiophene), poly(3-octylthiophene), poly(3-decylthiophene), poly(3-dodecylthiophene), poly(3-octadecylthiophene), poly(3-bromothiophene), poly(3-chlorothiophene), poly(3-iodothiophene), poly(3-cyanothiophene), poly(3-phenylthiophene), poly(3,4-dimethylthiophene), poly(3,4-dibutylthiophene), poly(3-hydroxythiophene), poly(3-methoxythiophene), poly(3-ethoxythiophene), poly(3-butoxythiophene), poly(3-hexyloxythiophene), poly(3-heptyloxythiophene), poly(3-octyloxythiophene), poly(3-decyloxythiophene), poly(3-dodecyloxythiophene), poly(3-octadecyloxythiophene), poly(3,4-dihydroxythiophene), poly(3,4-dimethoxythiophene), poly(3,4-diethoxythiophene), poly(3,4-dipropoxythiophene), poly(3,4-dibutoxythiophene), poly(3,4-dihexyloxythiophene), poly(3,4-diheptyloxythiophene), poly(3,4-dioctyloxythiophene), poly(3,4-didecyloxythiophene), poly(3,4-didodecyloxythiophene), poly(3,4-ethylenedioxythiophene), poly(3,4-propylenedioxythiophene), poly(3,4-butylenedioxythiophene), poly(3-methyl-4-methoxythiophene), poly(3-methyl-4-ethoxythiophene), poly(3-carboxythiophene), poly(3-methyl-4-carboxythiophene), poly(3-methyl-4-carboxyethylthiophene), poly(3-methyl-4-carboxybutylthiophene), and poly(3,4-ethyl eneoxythi athi ophene).

Examples of the polyanilines include polyaniline, poly(2-methylaniline), poly(3-isobutylaniline), poly(2-anilinesulfonic acid), and poly(3-anilinesulfonic acid).

Among these compounds, polypyrrole, polythiophene, poly(N-methylpyrrole), poly(3-methylthiophene), poly(3-methoxythiophene), and poly(3,4-ethylenedioxythiophene) are preferred from the viewpoint of high conductivity, conjugated conductive polymer, and further, poly(3,4-ethylenedioxythiophene) is more preferred from the viewpoint of high heat resistance.

### <Monomer as constitutional unit of conjugated conductive polymer>

The monomer for obtaining a conjugated conductive polymer, that is, the monomer as the constitutional unit of the conjugated conductive polymer preferably contains one or more compounds selected from the group consisting of pyrroles, anilines, and thiophenes. Examples of the substituent X which the compound has include alkyl groups with 1 to 18 carbon atoms, aryl groups with 6 to 10 carbon atoms, heteroaryl groups with 5 to 10 carbon atoms, alkoxy groups with 1 to 18 carbon atoms, alkylthio groups with 1 to 18 carbon atoms, a carboxy group, a hydroxyl group, halogen atoms, and a cyano group. Two or more of these substituents X may bind to each other through condensation or the like to form a ring. These alkyl groups, aryl groups, heteroaryl groups, alkoxy groups, and alkylthio groups may have another substituent Y such as a carboxy group, a hydroxyl group, a halogen atom, or a cyano group.

Examples of the monomer as the constitutional unit of the conjugated conductive polymer include pyrroles such as pyrrole, N-methylpyrrole, 3-methylpyrrole, 3-ethylpyrrole, 3-n-propylpyrrole, 3-butylpyrrole, 3-octylpyrrole, 3-decylpyrrole, 3-dodecylpyrrole, 3,4-dimethylpyrrole, 3,4-dibutylpyrrole, 3-carboxylpyrrole, 3-methyl-4-carboxylpyrrole, 3-methyl-4-carboxyethylpyrrole, 3-methyl-4-carboxybutylpyrrole, 3-hydroxypyrrole, 3-methoxypyrrole, 3-ethoxypyrrole, 3-butoxypyrrole, 3-hexyloxypyrrole, 3-methyl-4-hexyloxypyrrole, and 3-methyl-4-hexyloxypyrrole; thiophenes such as thiophene, 3-methylthiophene, 3-ethylthiophene, 3-propylthiophene, 3-butylthiophene, 3-hexylthiophene, 3-heptylthiophene, 3-octylthiophene, 3-decylthiophene, 3-dodecylthiophene, 3-octadecylthiophene, 3-bromothiophene, 3-chlorothiophene, 3-iodothiophene, 3-cyanothiophene, 3-phenylthiophene, 3,4-dimethylthiophene, 3,4-dibutylthiophene, 3-hydroxythiophene, 3-methoxythiophene, 3-ethoxythiophene, 3-butoxythiophene, 3-hexyloxythiophene, 3-heptyloxythiophene, 3-octyloxythiophene, 3-decyloxythiophene, 3-dodecyloxythiophene, 3-octadecyloxythiophene, 3,4-dihydroxythiophene, 3,4-dimethoxythiophene, 3,4-diethoxythiophene, 3,4-dipropoxythiophene, 3,4-dibutoxythiophene, 3,4-dihexyloxythiophene, 3,4-diheptyloxythiophene, 3,4-dioctyloxythiophene, 3,4-didecyloxythiophene, 3,4-didodecyloxythiophene, 3,4-ethylenedioxythiophene, 3,4-propylenedioxythiophene, 3,4-butylenedioxythiophene, 3-methyl-4-methoxythiophene, 3-methyl-4-ethoxythiophene, 3-carboxythiophene, 3-methyl-4-carboxythiophene, 3-methyl-4-carboxyethylthiophene, 3-methyl-4-carboxybutylthiophene, and 3,4-ethyleneoxythiathiophene; and anilines such as aniline, 2-methylaniline, 3-isobutylaniline, 2-anilinesulfonic acid, and 3-anilinesulfonic acid. These may be used alone or in combination.

Among these compounds listed above, the monomer as the constitutional unit of the conjugated conductive polymer preferably contains a compound which is one of the thiophenes represented by the following formula (1) to obtain a conjugated conductive polymer having high conductivity.

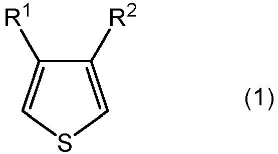

In the formula (1), R¹ and R² are each independently a hydrogen atom, a hydroxyl group, an alkyl group with 1 to 18 carbon atoms containing or not containing a substituent, an alkoxy group with 1 to 18 carbon atoms containing or not containing a substituent, an alkylthio group with 1 to 18 carbon atoms containing or not containing a substituent, or R² and R³ may bind to each other to form an alicycle with 3 to 10 carbon atoms containing or not containing a substituent, an aromatic ring with 6 to 10 carbon atoms containing or not containing a substituent, an oxygen atom-containing hetero ring with 2 to 10 carbon atoms containing or not containing a substituent, a sulfur atom-containing hetero ring with 2 to 10 carbon atoms containing or not containing a substituent, or a sulfur and oxygen atom-containing hetero ring with 2 to 10 carbon atoms containing or not containing a substituent.

The substituent herein is as defined in the substituent Y above, and examples thereof include a carboxy group, a hydroxyl group, halogen atoms, and a cyano group. To be noted, the number of carbon atoms of the substituent Y is not counted as the number of carbon atoms (hereinafter, the same is applied.).

Examples of the oxygen atom-containing hetero ring include an oxirane ring, an oxetane ring, a furan ring, a hydrofuran ring, a pyran ring, a pyrone ring, a dioxane ring, and a trioxane ring.

Examples of the sulfur atom-containing hetero ring include a thiirane ring, a thietane ring, a thiophene ring, a thiane ring, a thiopyran ring, a thiopyrylium ring, a benzothiopyran ring, a dithiane ring, a dithiolane ring, and a trithiane ring.

Examples of the sulfur atom and oxygen atom-containing hetero ring include an oxathiolane ring and an oxathiane ring.

Among these compounds represented by the formula (1), the monomer as the constitutional unit of the conjugated conductive polymer contains preferably a compound represented by the following formula (2), more preferably 3,4-ethylenedioxythiophene.

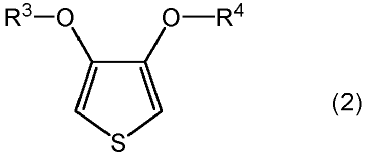

In the formula (2), R³ and R⁴ are each independently a hydrogen atom, an alkyl group with 1 to 4 carbon atoms containing or not containing a substituent, or R³ and R⁴ may bind to each other to form an oxygen atom-containing hetero ring with 3 to 6 carbon atoms containing or not containing a substituent.

R³ and R⁴ preferably bind to each other to form an oxygen atom-containing hetero ring with 3 to 6 carbon atoms containing or not containing a substituent.

Examples of the oxygen atom-containing hetero ring include a dioxane ring and a trioxane ring, and preferred is a dioxane ring.

The substituent herein is as defined in the substituent Y described above, and examples thereof include a carboxy group, a hydroxyl group, halogen atoms, and a cyano group.

The polymerization reaction for obtaining the conjugated conductive polymer is performed in a liquid containing the monomer as the constitutional unit of the conjugated conductive polymer and at least one of a seed particle with protective colloid formed of a polyanion and a polyanion (hereinafter, simply also referred to as monomer liquid).

To perform a uniform polymerization reaction, preferably, the monomer as the constitutional unit of the conjugated conductive polymer is dissolved, emulsified, or dispersed in the monomer liquid. The monomer liquid can be prepared, for example, by stirring with a stirrer such as a homomixer or a homogenizer or by ultrasonic irradiation.

The monomer liquid may contain only one or both of the seed particle with protective colloid formed of a polyanion and a polyanion.

When the monomer liquid contains the seed particle with protective colloid formed of a polyanion, the monomer liquid preferably contains an additional polyanion to suppress aggregation of the polymer. In other words, the monomer liquid preferably contains the seed particle with protective colloid formed of a polyanion and a polyanion, and more preferably contains the same polyanion as that forming the protective colloid for the seed particle. In this case, the amount of the polyanion added separately from seed particles is preferably 99% by mass or less, more preferably 10 to 90% by mass, still more preferably 20 to 80% by mass in 100% by mass of the total polyanion used.

Examples of a dispersion medium used in preparation of the monomer liquid include water; amides such as N-vinylpyrrolidone, hexamethylphosphoramide, N-vinylformamide, and N-vinylacetoamide; phenols such as cresol, phenol, and xylenol; polyhydric alcohols such as dipropylene glycol, 1,3-butylene glycol, 1,4-butylene glycol, diglycerol, isoprene glycol, butanediol, 1,5-pentanediol, 1,6-hexanediol, 1,9-nonanediol, and neopentyl glycol; carbonates such as ethylene carbonate and propylene carbonate; ethers such as dioxane, diethyl ether, propylene glycol dialkylethers, polyethylene glycol dialkylethers, and polypropylene glycol dialkylethers; heterocyclic compounds such as 3-methyl-2-oxazolidinone; nitriles such as acetonitrile, glutarodinitrile, methoxyacetonitrile, propionitrile, and benzonitrile. These dispersion media may be used alone or in combination. The dispersion medium preferably contains water. In this case, the content of water is preferably 1% by mass or more, more preferably 50% by mass, still more preferably 100% by mass in 100% by mass of the dispersion medium.

From the viewpoint of ease in preparation, the dispersion medium used to prepare the monomer liquid is preferably the same kind of dispersion medium as that used in production of the seed particles described later.

From the viewpoint of appropriate viscosity and reactivity during the polymerization reaction, the content of the dispersion medium in 100 parts by mass of the monomer liquid is preferably 1 to 99.9 parts by mass, more preferably 10 to 99 parts by mass, still more preferably 30 to 98 parts by mass.

### <Polyanion>

The polyanion refers to a polymer having two or more anionic groups. The polyanion is coordinated with the surface of a seed particle to form protective colloid, and functions as a dopant to the conjugated conductive polymer.

Examples of the anionic groups include groups composed of sulfonic acid or a salt thereof, groups composed of phosphoric acid or a salt thereof, monosubstituted phosphoric acid ester groups, groups composed of carboxylic acid or a salt thereof, and monosubstituted sulfuric acid ester groups. Among these, strong acidic groups are preferred, groups composed of sulfonic acid or a salt thereof and groups composed of phosphoric acid or a salt thereof are more preferred, and groups composed of sulfonic acid or a salt thereof are still more preferred.

Examples of salts include salts of sodium, potassium, magnesium, calcium, and ammonium.

The anionic groups may be attached to the main chain of the polymer constituting the polyanion, or may be attached to the side chains thereof. When the anionic groups are attached to the side chains, the anionic groups are preferably attached to side-chain ends of the polymer to obtain a prominent doping effect to the conjugated conductive polymer.

The polyanion may have a substituent other than the anionic group.

The substituent may be attached to the main chain of the polymer constituting the polyanion, or may be attached to the side chains thereof. When the substituent is attached to the side chain, the substituent is preferably attached to a side-chain end to demonstrate the properties of the substituent.

Examples of the substituent include alkyl groups, a hydroxyl group, alkoxy groups, a cyano group, a phenyl group, a hydroxyphenyl group, an ester group, alkenyl groups, an imide group, an amide group, an amino group, oxycarbonyl groups, a carbonyl group, and halogen atoms. Among these, preferred are alkyl groups, a hydroxyl group, a cyano group, a hydroxyphenyl group, and oxycarbonyl groups, and more preferred are alkyl groups, a hydroxyl group, and a cyano group.

The alkyl groups have a promising effect of enhancing the solubility to and dispersibility in the dispersion medium and the compatibility with and dispersibility in the conjugated conductive polymer. Preferred are alkyl groups with 1 to 12 carbon atoms from the viewpoint of the solubility to the dispersion medium, the dispersibility in the conjugated conductive polymer, and steric hindrance.

Examples of such alkyl groups include linear alkyl groups such as a methyl group, an ethyl group, a propyl group, a butyl group, an isobutyl group, a t-butyl group, a pentyl group, a hexyl group, an octyl group, a decyl group, and a dodecyl group; and cycloalkyl groups such as a cyclopropyl group, a cyclopentyl group, and a cyclohexyl group.

The hydroxyl group has a promising effect of facilitating formation of a hydrogen bond with another hydrogen atom or the like and enhancing the solubility to the dispersion medium and the compatibility with, dispersibility in, and adhesiveness to the conjugated conductive polymer. The hydroxyl group is preferably attached to terminals of an alkyl group with 1 to 6 carbon atoms attached to the main chain of the polymer constituting the polyanion.

The cyano group and the hydroxyphenyl group have a promising effect of enhancing the compatibility with the conjugated conductive polymer, the solubility to the dispersion medium, and heat resistance. The cyano group is preferably attached to the main chain of the polymer constituting the polyanion, terminals of an alkyl group with 1 to 7 carbon atoms attached to the main chain of the polymer, or terminals of an alkenyl group with 2 to 7 carbon atoms attached to the main chain of the polymer.

The oxycarbonyl groups are preferably alkyloxycarbonyl groups and aryloxycarbonyl groups, and are preferably directly attached to the main chain of the polymer constituting the polyanion or attached thereto via another functional group.

The composition of the main chain of the polymer constituting the polyanion is not particularly limited. Examples of the main chain of the polymer constituting the polyanion structure include polyalkylenes, polyimides, polyamides, and polyesters. Among these, polyalkylenes are preferred from the viewpoint of ease in synthesis and availability.

Polyalkylenes are polymers each composed of an ethylenically unsaturated monomer as the constitutional unit, and may contain a carbon-carbon double bond in the main chain structure.

Examples of polyalkylenes include polyethylene, polypropylene, polybutene, polypentene, polyhexene, polyvinyl alcohol, polyvinylphenol, poly(3,3,3-trifluoropropylene), polyacrylonitrile, polyacrylate, polymethacrylate, polystyrene, polybutadiene, and polyisoprene.

Examples of polyimides include those obtained by polycondensation of an acid anhydride, such as pyromellitic dianhydride, biphenyltetracarboxylic dianhydride, benzophenone tetracarboxylic dianhydride, 2,2,3,3-tetracarboxydiphenyl ether dianhydride, or 2,2-[4,4'-di(dicarboxyphenyloxy)phenyl]propane dianhydride, and a diamine such as oxydianiline, paraphenylenediamine, metaphenylenediamine, or benzophenonediamine.

Examples of polyamide include polyamide 6, polyamide 6,6, and polyamide 6,10.

Examples of polyesters include polyethylene terephthalate and polybutylene terephthalate.

Preferably, the polyanion has a group composed of a sulfonic acid or a salt thereof as the anionic group, as described above, because such a polyanion enhances the dispersibility of the monomer as the constitutional unit of the conjugated conductive polymer in the dispersion medium.

Examples of polyanions having a group composed of sulfonic acid, that is, a sulfo group (-SO₂OH) include polyvinyl sulfonic acid, polystyrenesulfonic acid, polyallylsulfonic acid, polyethyl acrylate sulfonic acid, polybutyl acrylate sulfonic acid, poly(2-acrylamide-2-methylpropanesulfonic acid), polyisoprene sulfonic acid, and copolymers thereof. Among these, polystyrenesulfonic acid, polyisoprene sulfonic acid, polyethyl acrylate sulfonic acid, and polybutyl acrylate sulfonic acid are preferred, and polystyrenesulfonic acid is more preferred from the viewpoint of high conductivity. From the viewpoint of water solubility, those having a sulfonate group instead of a sulfo group are preferred. For example, sodium polystyrene sulfonate is suitably used.

The polyanion has a weight average molecular weight of preferably 1000 to 1000000, more preferably 5000 to 500000, still more preferably 50000 to 300000 from the viewpoint of the solubility of the monomer liquid to the dispersion medium and the doping effect to the conjugated conductive polymer.

The weight average molecular weight herein indicates the standard polystyrene-based molecular weight measured by gel permeation chromatography. Specifically, the weight average molecular weight is a value measured by the method described in Examples.

The polyanion can be produced by a known production method described in JP 2005-76016 A, for example, or a commercial product can also be used.

The amount of the anionic group in the total amount of the polyanion used in polymerization of the monomer as the constitutional unit of the conjugated conductive polymer (that is, the polyanion used to form protective colloid of seed particles, the polyanion preliminarily charged in the monomer liquid before polymerization is started, and/or the polyanion added during the polymerization reaction) is preferably 0.25 to 30 mol, more preferably 0.5 to 25 mol, still more preferably 0.8 to 20 mol per 1 mol of the monomer as the constitutional unit of the conjugated conductive polymer from the viewpoint of the conductivity of the polymer and the dispersibility in the monomer liquid.

The amount of the polyanion used relative to 100 parts by mass of the conjugated conductive polymer is preferably 10 to 30000 parts by mass, more preferably 20 to 25000 parts by mass, still more preferably 50 to 20000 parts by mass from the viewpoint of the conductivity of the polymer and the dispersibility in the monomer liquid.

### <Seed particle>

The seed particle is a particle used in formation of protective colloid formed of the polyanion.

For example, the seed particle is preferably a polymer particle containing a constitutional unit derived from an ethylenically unsaturated monomer. Preferred examples of polymer particles include particles of homopolymers or copolymers obtained by polymerizing ethylenically unsaturated monomers. Polymers used in the polymer particles may be used alone or in combination, and may be crystalline or non-crystalline. When the polymer is crystalline, it preferably has a degree of crystallization of 50% or less.

The ethylenically unsaturated monomers can be those having a polymerizable ethylenic carbon-carbon double bond, and examples thereof include (meth)acrylates having a linear, branched, or cyclic alkyl group; aromatic vinyl compounds such as styrene and α-methylstyrene; heterocyclic vinyl compounds such as vinylpyrrolidone; hydroxyalkyl (meth)acrylates; dialkylaminoalkyl (meth)acrylates such as 2-ethylhexyl (meth)acrylate; vinyl esters such as vinyl acetate and vinyl alkanoate; monoolefins such as ethylene, propylene, butylene, and isobutylene; conjugated diolefins such as butadiene, isoprene, and chloroprene; α,β-unsaturated mono- or dicarboxylic acids such as (meth)acrylic acid, crotonic acid, itaconic acid, maleic acid, and fumaric acid; vinyl cyanide compounds such as acrylonitrile; and carbonyl group-containing vinyl compounds such as acrolein and diacetone acrylamide. These ethylenically unsaturated monomers may be used alone or in combination.

The ethylenically unsaturated monomers each may contain a cross-linkable monomer, and these ethylenically unsaturated monomers may be cross-linked with each other, or may be cross-linked in combination with an ethylenically unsaturated compound having an active hydrogen group. When the ethylenically unsaturated monomer is used in the form of a cross-linked copolymer, a solid electrolyte containing the cross-linked copolymer is likely to have improved water resistance, moisture resistance, and heat resistance.

The content of the cross-linkable monomer in the ethylenically unsaturated monomer is preferably 50% by mass or less, more preferably 35% by mass or less, still more preferably 25% by mass or less.

The cross-linkable monomer herein indicates a compound having two or more ethylenic carbon-carbon double bonds, or a compound having one or more ethylenic carbon-carbon double bonds and one or more different reactive groups.

Examples of the cross-linkable monomer include epoxy group-containing α,β-ethylenically unsaturated compounds such as glycidyl (meth)acrylate; hydrolyzable alkoxysilyl group-containing α,β-ethylenically unsaturated compounds such as vinyltriethoxysilane and γ-methacryloxypropyltrimethoxysilane; and polyfunctional vinyl compounds such as ethylene glycol di(meth)acrylate, trimethylolpropane tri(meth)acrylate, allyl (meth)acrylate, divinylbenzene, and diallyl phthalate. Alternatively, a cross-linkable monomer such as a carbonyl group-containing α,β-ethylenically unsaturated compound (ketone group-containing compound) in combination with a polyhydrazine compound (in particular, a compound having two or more hydrazide groups, such as oxalic acid dihydrazide, succinic acid dihydrazide, adipic acid dihydrazide, or polyacrylic acid hydrazide) may be cross-linked.

A liquid containing the seed particle with protective colloid formed of a polyanion can be obtained as a resin emulsion. The resin emulsion can be produced by a radical polymerization reaction under normal pressure or in a pressure-resistant reactor, using any one of batch-wise, semi-continuous, and continuous methods. From the viewpoint of a stable polymerization reaction and uniformity of the seed particle, preferably, a seed particle raw material liquid containing an ethylenically unsaturated monomer is continuously or intermittently added to a polyanion-containing liquid to cause polymerization.

For the polyanion and the ethylenically unsaturated monomer used in production of the resin emulsion, the blending amount of the ethylenically unsaturated monomer is preferably 10 to 100 parts by mass, more preferably 20 to 90 parts by mass, still more preferably 30 to 80 parts by mass relative to 100 parts by mass of the polyanion to suppress an increase in viscosity during the polymerization reaction and provide stability of the seed particle with protective colloid formed of the polyanion.

From the viewpoint of dispersibility of the seed particle and a suppression in sedimentation, the seed particle with protective colloid formed of the polyanion in the resin emulsion has a volume-based 50% median particle size (d₅₀) of preferably 0.01 to 10 µm, more preferably 0.05 to 1 µm, still more preferably 0.1 to 0.8 µm.

The d₅₀ is determined by the method described later in Examples.

The solvent or dispersion medium for the polyanion-containing liquid and the seed particle raw material liquid is preferably an aqueous medium, and is more preferably water or a mixed solvent of water and a water-soluble solvent. The proportion of the water-soluble solvent in the mixed solvent is preferably 30% by mass or less from the viewpoint of a stable polymerization reaction.

Examples of the water-soluble solvent include alcohols such as methanol, ethanol, isopropyl alcohol; ketones such as acetone; glycols such as ethylene glycol and propylene glycol; and ethers such as ethylene glycol monomethyl ether and ethylene glycol monobutyl ether.

The polyanion contributes to the stability of the seed particle and the resin emulsion. From the viewpoint of a stable polymerization reaction, an emulsifier or aliphatic amine may be added to the polymerization system as needed. The types and amounts of the emulsifier and aliphatic amine to be used are appropriately adjusted according to the amount of the polyanion to be used and the composition of the ethylenically unsaturated monomer. Such emulsifiers and aliphatic amines each may be used alone or in combination.

Examples of the emulsifier include anionic surfactants such as alkyl sulfuric acid ester salts, alkylbenzene sulfonic acid salts, alkylsulfosuccinic acid salts, alkyldiphenyl ether disulfonic acid salts, polyoxyalkylene alkyl sulfuric acid salts, and polyoxyalkylene alkyl phosphoric acid esters; and nonionic surfactants such as polyoxyalkylene alkyl ethers, polyoxyalkylene alkyl phenol ethers, polyoxyalkylene fatty acid esters, and polyoxyalkylene sorbitan fatty acid esters.

Examples of aliphatic amines include primary amines such as octylamine, laurylamine, myristylamine, stearylamine, and oleylamine; secondary amines such as dioctylamine, dilaurylamine, distearylamine, and dioleylamine; and tertiary amines such as N,N-dimethyllaurylamine, N,N-dimethylmyristylamine, N,N-dimethylpalmitylamine, N,N-dimethylstearylamine, N,N-dimethylbehenylamine, N,N-dimethyloleylamine, N-methyldidecylamine, and N-methyldioleylamine.

From the viewpoint of a stable polymerization reaction, a water-soluble polymer such as polyvinyl alcohol, methylcellulose, carboxymethylcellulose, hydroxyethylcellulose, hydroxypropylcellulose, or polyvinylpyrrolidone may be added to the polymerization system in the range not imparting the properties of the conjugated conductive polymer to be produced.

A known polymerization initiator can be used in the radical polymerization reaction, and examples thereof include inorganic peroxides such as hydrogen peroxide, persulfuric acid, ammonium persulfate, potassium persulfate, and sodium persulfate; organic peroxides such as benzoyl peroxide and t-butyl hydroperoxide; and azo compounds such as 2,2'-azobisisobutyronitrile and 4,4'-azobis(4-cyanovaleric acid). A redox polymerization may be performed using these polymerization initiators in combination with sodium sulfoxylate formaldehyde, ascorbic acids, sulfurous acid salts, tartaric acid or a salt thereof, or iron(II) sulfate. Moreover, a chain transfer agent such as an alcohol or a mercaptan may be used as needed.

The reaction temperature in the radical polymerization reaction is usually 10 to 100°C, preferably 30 to 90°C. The reaction time is not particularly limited, and is appropriately adjusted according to the amounts of raw materials, the type of the polymerization initiator, and the reaction temperature.

The resin emulsion obtained by the radical polymerization reaction is preferably desalted to stably hold the seed particle with protective colloid formed of a polyanion. The desalting method is not particularly limited, and a known method can be used. Examples thereof include dialysis, a centrifugal washing method, and an ion exchange method using an ion exchange resin.

### <Polymer-containing liquid>

The polymerization reaction of the monomer as the constitutional unit of the conjugated conductive polymer is preferably performed in the presence of an oxidant to obtain the polymer-containing liquid.

Examples of the oxidant include peroxodisulfuric acid salts such as peroxodisulfuric acid, ammonium peroxodisulfate, sodium peroxodisulfate, and potassium peroxosulfate; metal halogen compounds such as boron trifluoride; transition metal compounds such as ferric chloride, ferric sulfate, and cupric chloride; metal oxides such as silver oxide and cesium oxide; peroxides such as hydrogen peroxide and ozone; organic peroxides such as benzoyl peroxide; and oxygen. Among these, peroxodisulfuric acid, peroxodisulfuric acid salts, and transition metal compounds are preferred, and peroxodisulfuric acid salts and transition metal compounds are more preferred. These oxidants may be used alone or in combination.

To appropriately promote the polymerization reaction, the amount of the oxidant used is preferably 50 to 1500 parts by mass, more preferably 70 to 1000 parts by mass, still more preferably 100 to 500 parts by mass relative to 100 parts by mass of the monomer as the constitutional unit of the conjugated conductive polymer.

The temperature during the polymerization reaction of the monomer as the constitutional unit of the conjugated conductive polymer is usually 5 to 80°C, preferably 10 to 60°C, more preferably 15 to 40°C from the viewpoint of an appropriate reaction rate and a suppression in increase of viscosity of the reaction liquid. The temperature may be appropriately varied according to the progress of the reaction.

To make the reaction system homogeneous and suppress aggregation of the polymer, preferably, the polymerization reaction of the monomer as the constitutional unit of the conjugated conductive polymer is performed with stirring. The stirring method is not particularly limited as long as a homogenous reaction system can be obtained, and examples thereof include a method of stirring while circulating the monomer liquid using a high shear mixer or the like.

### [Step (2)]

In the step (2), a first dispersion treatment is performed on the polymer-containing liquid obtained in the step (1) to obtain a dispersion (a).

The first dispersion treatment is performed to crush aggregated particles of the polymer in the polymer-containing liquid into primary particles. Examples of the apparatus used in the dispersion treatment include homogenizers, ball mills, high shear mixers, and ultrasonic dispersion apparatuses. Preferably, the dispersion treatment is performed, for example, by stirring under a strong shear force at a shear rate of 5000 s⁻¹ or more, by using a high pressure homogenizer, or by ultrasonic irradiation at a frequency of about 15 to 100 Hz. The dispersion treatment may be performed in a flow mode or in a batch mode, and may be performed several times.

When a high pressure homogenizer is used, the pressure is preferably 1 to 200 MPa, more preferably 2 to 150 MPa, still more preferably 5 to 100 MPa to increase the efficiency of the dispersion treatment and suppress an increase in temperature of the dispersion.

The total treatment in the dispersion treatment using a high pressure homogenizer is preferably 15 to 900 minutes, more preferably 30 to 600 minutes, still more preferably 60 to 300 minutes to increase the efficiency of the dispersion treatment.

If the temperature of the dispersion is increased during the dispersion treatment, a cooler may be used. The cooler is any cooler as long as it can control an increase in temperature, and a known cooler can be used. Examples thereof include plate-type heat exchangers, spiral heat exchangers, tube-type heat exchangers, in-tank heat exchangers, and jacket tanks. Among these, plate-type heat exchangers and spiral heat exchangers are preferred from the viewpoint of heat exchange efficiency and the size of the apparatus.

To effectively perform a second dispersion treatment in the step (3), the solids content containing the polymer in the dispersion (a) obtained by the first dispersion treatment, preferably 0.2 to 15% by mass, more preferably 0.5 to 10% by mass, more preferably 1 to 8% by mass.

The dispersion (a) may be diluted to adjust the solids content. The dilution may be performed at any timing, i.e., before, during, or after the dispersion treatment. To increase the efficiency of the dispersion treatment and suppress re-aggregation, preferably, the dispersion (a) is diluted during the dispersion treatment, and the dispersion treatment is performed several times.

To avoid a remarkable change in dispersibility, the dispersion medium used in the dilution is preferably the same dispersion medium as that used in preparation of the monomer liquid, more preferably water or an aqueous medium.

To keep the dispersibility of solids, the dispersion (a) is preferably desalted after the first dispersion treatment. The desalting method is not particularly limited, and a known method can be used. Examples thereof include dialysis, a centrifugal washing method, and an ion exchange method.

### [Step (3)]

In the step (3), an electric conductivity improver is added to the dispersion (a) obtained in the step (2), and a second dispersion treatment is performed to obtain a dispersion (b).

The second dispersion treatment is a dispersion treatment performed again after an electric conductivity improver is added to the dispersion (a) subjected to the first dispersion treatment. By performing the second dispersion treatment, the dispersion (b) is obtained, which is suitable for formation of a solid electrolyte for a solid electrolytic capacitor having a large capacitance and a low ESR. It is considered that the performance of the solid electrolyte is thus improved because some favorable interaction is demonstrated as a result of the second dispersion treatment performed on the polymer, the polyanion, and the electric conductivity improver in the dispersion (b).

When the step (3) is performed without the step (2), it is difficult to sufficiently crush aggregated polymer particles into primary particles in the state where the electric conductivity improver is added, and thus a dispersion homogeneously dispersed cannot be obtained.

The apparatus and dispersion treatment method used in the second dispersion treatment can be the same as those used in the first dispersion treatment.

When a high pressure homogenizer is used, the pressure can be in the same range as that in the first dispersion treatment.

The total treatment time in the second dispersion treatment using a high pressure homogenizer may be shorter than the total treatment time in the first dispersion treatment because aggregation of particles of the polymer in the dispersion (a) is relaxed by the first dispersion treatment. To increase the efficiency of the dispersion treatment and suppress an increase in temperature of the dispersion, the total treatment time in the second dispersion treatment is preferably shorter than that in the first dispersion treatment. To obtain the effects of the present invention and increase the efficiency of the dispersion treatment at the same time, the total treatment time in the second dispersion treatment using a high pressure homogenizer is preferably 20 to 150 minutes, more preferably 30 to 120 minutes, still more preferably 40 to 90 minutes.

If the temperature of the dispersion is increased during the dispersion treatment, cooling can also be performed as in the first dispersion treatment.

From the viewpoint of efficiency of producing a solid electrolyte for a solid electrolytic capacitor, the solids content in the dispersion (b) obtained by the second dispersion treatment is preferably 0.2 to 15% by mass, more preferably 0.5 to 10% by mass, more preferably 1 to 8% by mass.

The dispersion (b) may be diluted to adjust the solids content. The dilution may be performed at any timing, i.e., before, during, or after the dispersion treatment. To increase the efficiency of the dispersion treatment and suppress re-aggregation, preferably, the dispersion (b) is diluted before the dispersion treatment.

To avoid a remarkable change in dispersibility, the dispersion medium used in the dilution is preferably the same dispersion medium as that used in preparation of the monomer liquid, more preferably water or an aqueous medium.

### <Electric conductivity improver>

The electric conductivity improver is added to improve the electric conductivity of the dispersion (a).

Examples of the electric conductivity improver include ethers such as tetrahydrofuran; lactones such as γ-butyrolactone and γ-valerolactone; amides or lactams such as caprolactam, N-methylcaprolactam, N,N-dimethylacetamide, N-methylacetoamide, N,N-dimethylformamide, N-methylformamide, N-methylformanilide, N-methylpyrrolidone, N-octylpyrrolidone, and pyrrolidone; sulfones or sulfoxides such as tetramethylene sulfone and dimethyl sulfoxide; saccharides, such as sucrose, glucose, fructose, and lactose, and derivatives thereof; sugar alcohols such as sorbitol and mannitol; imides such as succinimide and maleimide; furans such as 2-furancarboxylic acid and 3-furancarboxylic acid; and polyalcohols such as ethylene glycol, propylene glycol, glycerol, diethylene glycol, and triethylene glycol. Among these, ethers, lactones, amides, lactams, sugar alcohols, and polyalcohols are preferred, and polyalcohols are particularly preferred. To improve the electric conductivity, specific compounds are preferably tetrahydrofuran, γ-butyrolactone, N-methylformamide, N-methylpyrrolidone, ethylene glycol, propylene glycol, glycerol, diethylene glycol, triethylene glycol, dimethyl sulfoxide, and sorbitol, and are more preferably ethylene glycol, diethylene glycol, and triethylene glycol. These electric conductivity improvers may be used alone or in combination.

To improve the electric conductivity of the dispersion (a) and suppress an increase in viscosity, the amount of the electric conductivity improver added is preferably 1 to 30 parts by mass, more preferably 5 to 25 parts by mass, still more preferably 7 to 20 parts by mass per 1 part by mass of solids in the dispersion (a).

### <Alkaline compound>

The dispersion (b) may contain an alkaline compound to adjust the pH and suppress corrosion of a metal in contact with the dispersion.

The alkaline compound is not particularly limited, and a known organic or inorganic alkaline compound can be used. Such alkaline compounds may be used alone or in combination. The alkaline compound is preferably added in the step (3).

Examples of organic alkaline compounds include aromatic amines, aliphatic amines, heterocyclic amines, and alkali metal alkoxides.

Examples of aromatic amines include nitrogen-containing heteroaryls such as pyridines, imidazoles, pyrimidines, pyrazines, and triazines. Among these, pyridines, imidazoles, and pyrimidines are preferred from the viewpoint of solubility.

Examples of aliphatic amines include ethylamine, n-octylamine, diethylamine, diisobutylamine, methylethylamine, trimethylamine, triethylamine, allylamine, 2-ethylaminoethanol, 2,2'-iminodiethanol, and N-ethylethylenediamine.

Examples of heterocyclic amines include azetidines, pyrrolidines, piperidines, piperazines, morpholines, and thiomorpholines. Among these, morpholines are preferred from the viewpoint of general versatility.

Specific examples of morpholines include morpholine, 4-methylmorpholine, 4-ethylmorpholine, 4-n-propylmorpholine, 4-isopropylmorpholine, 4-n-butylmorpholine, 4-isobutylmorpholine, 4-pentylmorpholine, 4-hexylmorpholine, (R)-3-methylmorpholine, (S)-3-methylmorpholine, cis-2,6-dimethylmorpholine, 4-(1-cyclohexenyl)morpholine, 1-morpholino-1-cyclopentene, 4-phenylmorpholine, 4-(p-tolyl)morpholine, 4-(2-aminoethyl)morpholine, 4-(3-aminopropyl)morpholine, 2-morpholinoaniline, 4-morpholinoaniline, 4-(2-morpholinoethoxy)aniline, 4-(4-pyridyl)morpholine, 4-aminomorpholine, 4-(2-hydroxypropyl)morpholine, 4-(2-hydroxyethyl)morpholine, 4-(3-hydroxypropyl)morpholine, 2-hydroxy-3-morpholinopropane sulfonic acid, 2-morpholinoethanesulfonic acid, 3-morpholinopropanesulfonic acid, 4-acetylmorpholine, 4-acetoacetylmorpholine, 4-acryloylmorpholine, 4-allylmorpholine, phenylmorpholine, ethyl 3-(morpholino)propionate, 4-formylmorpholine, 4-(4-formylphenyl)morpholine, and salts thereof. Among these, morpholine, 4-ethylmorpholine, 4-n-butylmorpholine, 4-isobutylmorpholine, 4-phenylmorpholine, 4-(2-hydroxypropyl)morpholine, 4-(2-hydroxyethyl)morpholine, and 4-(3-hydroxypropyl)morpholine are preferred, and one or more selected from the group consisting of morpholine, 4-ethylmorpholine, and 4-(2-hydroxyethyl)morpholine are more preferred from the viewpoint of availability and handling properties.

Examples of alkali metal alkoxides include sodium alkoxides such as sodium methoxide and sodium ethoxide; potassium alkoxides; and calcium alkoxides.

Examples of inorganic alkaline compounds include ammonia, sodium hydroxide, potassium hydroxide, calcium hydroxide, and ammonia.

To suppress corrosion of the metal in contact with the dispersion (b) and suppress dedoping of the polyanion from the polymer, the alkaline compound is added to the dispersion (a) in an amount such that the pH of the dispersion (a) is preferably 3 to 13, more preferably 3 to 8, still more preferably 4 to 7.

### <Other additives>

To impart physical properties suitable for the solid electrolytic capacitor, the dispersion (b) may contain other additives other than the electric conductivity improver and the alkaline compound. The types and the amounts of other additives added are not particularly limited as long as these do not significantly affect the electric conductivity and viscosity of the dispersion (b). These other additives may be added in the step (2).

Examples of other additives include water-soluble polymer compounds, water-dispersible compounds, surfactants, defoamers, coupling agents, and antioxidants. These other additives may be used alone or in combination.

The water-soluble polymer compounds and the water-dispersible compounds can have action to adjust the viscosity of the dispersion (b) and improve the coating performance.

When a water-soluble polymer compound and/or a water-dispersible compound is added, the total amount thereof added is preferably 50 parts by mass or less, more preferably 0.01 to 40 parts by mass, still more preferably 0.5 to 20 parts by mass relative to 1 part by mass of solids in the dispersion (b) to control the total amount in the range demonstrating the above action without significantly affecting the electric conductivity and viscosity of the dispersion (b).

Examples of the water-soluble polymer compound include polyoxyalkylenes, water-soluble polyurethanes, water-soluble polyesters, water-soluble polyamides, water-soluble polyimides, water-soluble polyacrylics, water-soluble polyacrylamides, polyvinyl alcohol, and polyacrylic acid. Among these, polyoxyalkylenes are preferred.

Examples of polyoxyalkylenes include oligopolyethylene glycol, triethylene glycol monochlorohydrin, diethylene glycol monochlorohydrin, oligoethylene glycol monochlorohydrin, triethylene glycol monobromhydrin, diethylene glycol monobromhydrin, oligoethylene glycol monobromhydrin, polyethylene glycol, glycidyl ethers, polyethylene glycol glycidyl ethers, polyethylene oxide, triethylene glycol-dimethyl ether, tetraethylene glycol-dimethyl ether, diethylene glycol-dimethyl ether, diethylene glycol-diethyl ether·diethylene glycol-dibutyl ether, dipropylene glycol, tripropylene glycol, polypropylene glycol, polypropylenedioxide, polyoxyethylene alkyl ether, polyoxyethylene glycerol fatty acid esters, and polyoxyethylene fatty acid amides.

The water-dispersible compound herein indicates a low-hydrophilicity compound partially substituted by a high-hydrophilicity functional group, or a low-hydrophilicity compound on which a compound having a high-hydrophilicity functional group adsorbs (such as an emulsion) and which is dispersed in water without precipitated.

Examples of such a water-dispersible compound include polyester, polyurethane, acrylic resin, silicone resin, and emulsions thereof. Examples thereof also include block copolymers and graft copolymers of acrylic resin with polyester or polyurethane.

Examples of surfactants include anion surfactants such as carboxylic acid salts, sulfonic acid salts, sulfuric acid ester salts, and phosphoric acid ester salts; cation surfactants such as amine salts and quaternary ammonium salts; amphoteric surfactants such as carboxybetaine, aminocarboxylic acid salts, and imidazolium betaine; and nonionic surfactants such as polyoxyethylene alkyl ethers, polyoxyethylene glycerol fatty acid esters, ethylene glycol fatty acid esters, and polyoxyethylene fatty acid amides.

Examples of defoamers include silicone resin, polydimethylsiloxane, and silicone oil.

Examples of antioxidants include phenol-based antioxidants, amine-based antioxidants, phosphorus-based antioxidants, sulfur-based antioxidants, and vitamins.

### [Method for producing solid electrolytic capacitor]

The method for producing a solid electrolytic capacitor according to the present embodiment comprises a step (4) of attaching the polymer dispersion for a solid electrolytic capacitor obtained by the above-mentioned production method according to the present embodiment to a porous anode body made of a valve metal and having a dielectric film on the surface thereof; and a step (5) of removing the dispersion medium from the dispersion attached to the porous anode body to form a solid electrolyte layer.

By forming a solid electrolyte layer through the above-mentioned steps using the polymer dispersion obtained by the production method according to the present embodiment, a solid electrolytic capacitor having a large capacitance and a low ESR can be suitably produced.

### [Step (4)]

In the step (4), the polymer dispersion for a solid electrolytic capacitor obtained by the production method according to the present embodiment is attached to a porous anode body made of a valve metal and having a dielectric film on the surface thereof.

Examples of the valve metal include aluminum, beryllium, bismuth, magnesium, germanium, hafnium, niobium, antimony, silicon, tin, tantalum, titanium, vanadium, tungsten, zirconium, and alloys or compounds containing at least one of these metals. Among these, aluminum, niobium, and tantalum are preferred from the viewpoint of general versatility.

The porous anode body can be produced by forming a dielectric film on the surface of a porous valve metal by a known method.

The porous valve metal can be obtained, for example, by sintering a valve metal powder having a high specific surface area or etching a valve metal foil.

The dielectric film can be formed as a dielectric oxide film on the surface of the porous valve metal, for example, by anode oxidation of the porous valve metal in a phosphoric acid salt solution. The formation voltage for the anode oxidation is set according to the thickness of the dielectric oxide film and the withstand voltage of the capacitor, and is preferably 1 to 800 V, more preferably 1 to 500 V, more preferably 1 to 300 V.

The polymer dispersion can be applied to the porous anode body by a known method such as coating, spraying, or immersion. Among these methods, an immersion method is preferred because the polymer dispersion can be evenly permeated into the entire porous anode body, and attached thereto. To sufficiently permeate the polymer dispersion into fine portions of pores of the porous anode body, the polymer dispersion may be impregnated under reduced pressure.

When the polymer dispersion is attached to the porous anode body by immersion, usually, the porous anode body is immersed in the polymer dispersion at about 10 to 35°C for about 10 seconds to 5 minutes although the time and the temperature depend on the type and viscosity of the dispersion medium for the polymer dispersion.

### [Step (5)]

In the step (5), the dispersion medium is removed from the polymer dispersion attached to the porous anode body obtained in the step (4) to form a solid electrolyte layer.

The removal of the dispersion medium herein indicates not only a state where the dispersion medium is completely absent, but also a state where the dispersion medium may be partially left within the range not obstructing production of the solid electrolytic capacitor.

The dispersion medium is preferably removed by drying by a heat treatment from the viewpoint of efficiency in removal. The heating condition is appropriately set in consideration of the boiling point and volatility of the dispersion medium and the oxidative degradation of the polymer, and usually the heat treatment is performed at room temperature to 300°C, preferably 40 to 250°C, still more preferably 50 to 200°C for 5 seconds to a few hours. A heating apparatus to be used can be a hot plate, an oven, or a hot air dryer, for example. To increase the drying efficiency, drying may be performed under reduced pressure.

From the viewpoint of a uniform thickness of the solid electrolyte layer, after the step (5), the step (4) and the step (5) may be repeated in this order again, and the operation to repeat the step (4) and the step (5) may be performed two times or more. Alternatively, after the step (4) is performed two times or more, the step (5) may be performed.

Furthermore, the solid electrolyte layer formed in the step (5) may be impregnated with any electrolyte.

When the solid electrolyte layer is impregnated with an electrolyte, a known electrolyte for an electrolytic capacitor can be used. Examples thereof include polar organic solvents which may contain a salt.

Examples of the salt include ammonium salts; quaternary ammonium salts such as tetramethylammonium salts, triethylmethylammonium salts, and tetraethylammonium salts; amidinium salt such as ethyldimethylimidazolinium salts and tetramethylimidazolinium salts; primary amine salts such as methylamine salts, ethylamine salts, and propylamine salts; secondary amine salts such as dimethylamine salts, diethylamine salts, ethylmethylamine salts, and dibutylamine salts; tertiary amine salts such as trimethylamine salts, triethylamine salts, tributylamine salts, ethyldimethylamine salts, and ethyldiisopropylamine salts; sodium salts; and potassium salts.

Examples of acids constituting salts include carboxylic acids such as oxalic acid, succinic acid, glutaric acid, pimelic acid, suberic acid, sebacic acid, phthalic acid, isophthalic acid, terephthalic acid, maleic acid, adipic acid, benzoic acid, toluic acid, enanthic acid, malonic acid, 1,6-decanedicarboxylic acid, 1,7-octanedicarboxylic acid, azelaic acid, resorcylic acid, phloroglucinic acid, gallic acid, gentisic acid, protocatechuic acid, pyrocatechuic acid, trimellitic acid, and pyromellitic acid; and organic acids such as sulfonic acid. Examples thereof also include boric acid, phosphoric acid, phosphorous acid, hypophosphorous acid, carbonic acid, and silicic acid. Examples thereof also include boron complexes such as borodisalicylic acid, borodioxalic acid, borodiglycolic acid, borodimalonic acid, borodisuccinic acid, borodiadipic acid, borodiazelaic acid, borodibenzoic acid, borodimaleic acid, borodilactic acid, borodimalic acid, boroditartaric acid, borodicitric acid, borodiphthalic acid, borodi(2-hydroxy)isobutyric acid, borodiresorcylic acid, borodimethylsalicylic acid, borodinaphthoic acid, borodimandelic acid, and borodi(3-hydroxy)propionic acid.

The polar organic solvents for the electrolyte to be used can be protic solvents, and examples thereof include monohydric alcohols such as ethanol, propanol, butanol, pentanol, hexanol, cyclobutanol, cyclopentanol, cyclohexanol, and benzyl alcohol; and polyhydric alcohols and oxyalcohol compounds such as ethylene glycol, diethylene glycol, propylene glycol, glycerol, methylcellosolve, ethylcellosolve, methoxypropylene glycol, dimethoxypropanol, polyethylene glycol, and alkylene oxide adducts of polyoxyethylene glycerol.

Non-protic solvents can also be used as the polar organic solvent, and examples thereof include sulfones such as dimethylsulfone, ethylmethylsulfone, diethylsulfone, sulfolane, 3-methylsulfolane, and 2,4-dimethylsulfolane; amides such as N-methylformamide, N,N-dimethylformamide, N-ethylformamide, N,N-diethylformamide, N-methylacetoamide, N,N-dimethylacetamide, N-ethylacetoamide, N,N-diethylacetamide, and hexamethylphophoric amide; lactones and amides such as γ-butyrolactone, γ-valerolactone, δ-valerolactone, N-methyl-2-pyrrolidone, ethylene carbonate, propylene carbonate, butylene carbonate, and isobutylene carbonate; nitriles such as acetonitrile, 3-methoxypropionitrile, and glutaronitrile; and oxides such as dimethyl sulfoxide.

The electrolyte may contain additives. Examples of additives include complexes of boric acid with polysaccharides such as mannite and sorbit; complexes of boric acid with polyhydric alcohols; boric acid esters; nitro compounds such as o-nitrobenzoic acid, m-nitrobenzoic acid, p-nitrobenzoic acid, o-nitrophenol, m-nitrophenol, p-nitrophenol, and p-nitrobenzyl alcohol; and phosphoric acid esters. These may be used alone or in combination.

The method for producing a solid electrolytic capacitor according to the present embodiment can be performed in the same manner as that in a known process of producing the solid electrolytic capacitor except that the steps (4) and (5) are performed. Accordingly, a solid electrolytic capacitor having a larger capacitance and a lower ESR than those in the related art can be produced by applying the method for producing a solid electrolytic capacitor according to the present embodiment to the existing capacitor element.

### Examples

Hereinafter, the present embodiment will be more specifically described by way of Examples and Comparative Examples, but the present invention is not limited to Examples below.

### [Measurement method]

Methods for measuring a variety of physical properties in Examples and Comparative Examples are shown below.

### [Weight average molecular weight]

The weight average molecular weight (Mw) of sodium polystyrenesulfonate was determined by gel permeation chromatography as a standard polystyrene-based molecular weight measured under the following measurement conditions.

### <Measurement conditions>

measurement apparatus: "Shodex (registered trademark) GPC 101", available from Showa Denko K.K.
column used: "OHpak SB-806M HQ", available from Showa Denko K.K.
column temperature: 40°C
eluate: water
elution rate: 1 mL/min
standard sample: polystyrene

### [Glass transition temperature]

The glass transition temperature was determined by differential scanning calorimetry (DSC) according to JIS K 7121:2012 using a sample of seed particles dried under a nitrogen gas atmosphere. The sample in an aluminum pan, which was sealed, was measured with a differential scanning calorimeter ("EXSTAR DSC/SS7020", available from Hitachi High-Tech Science Corporation; under a nitrogen gas atmosphere, heating rate: 20°C/min; temperature range: 0 to 150°C). The temperature at a point of intersection between the base line before the obtained DSC curve shifted (on the lower temperature side) and the tangent of the inflection point of glass transition was determined as the glass transition temperature Tg [°C] of the seed particles.

### [Particle size]

The particle size of the seed particles is expressed as a 50% volume cumulative particle size (d₅₀) measured with a particle size distribution measurement apparatus (microtrack (registered trademark) UPA, available from NIKKISO CO., LTD.).

### [Solids content]

For the solids content in each of a variety of liquids, about 10 g of a sample was weighed, the water content was measured with an infrared moisture analyzer ("FD-720", available from Kett Electric Laboratory Co. Ltd.; heating conditions: 110°C/30 minutes), and residues after evaporation were calculated as solids.

### [pH]

The pH of the dispersion (a) was measured with a pH meter ("HM-30G", available from DKK-TOA CORPORATION; 25°C).

### [Production of dispersion for solid electrolytic capacitor]

### [Example 1]

### <Production of seed particles-containing liquid>

86 g of styrene, 49 g of 2-ethylhexyl acrylate, 15 g of divinylbenzene, and 500 g of a 22% by mass aqueous solution of sodium polystyrenesulfonate ("PolyNaSS(registered trademark) PS-5", available form Tosoh Finechem Corporation; Mw; about 120000; hereinafter, the same is applied) were mixed with stirring to obtain a monomer liquid (1).

Meanwhile, 1000 g of a 22% by mass aqueous solution of sodium polystyrenesulfonate was heated to 80°C with stirring, and 2 g of potassium persulfate was added thereto to obtain a monomer liquid (2).

The monomer liquid (1) and 40 g of a 2.5% by mass aqueous solution of potassium persulfate were added dropwise to the monomer liquid (2) over 2 hours and 2.5 hours, respectively, and the resulting liquid was kept at 80°C for 2 hours, and then cooled to room temperature (25°C).

1500 mL of a cation exchange resin ("Amberlite (registered trademark) IR120B-H", available from ORGANO CORPORATION; hereinafter, the same is applied) and 1500 mL of an anion exchange resin ("Amberlite (registered trademark) IRA410-OH", available from ORGANO CORPORATION; hereinafter, the same is applied) were added to the resulting reaction liquid, and were stirred for 12 hours, and then the ion exchange resins were separated through filtration. Pure water was added, giving a seed particles-containing liquid containing a seed particle with protective colloid formed of a polyanion (Tg: 30°C, particle size (d₅₀): 0.46 µm) (solids content: 15.0% by mass). The seed particle with protective colloid formed of a polyanion was generated through the above steps.

### <Production of monomer liquid 1>

In a 1-L vessel made of polyethylene, 223.2 g of pure water, 31.5 g of a 12% by mass aqueous solution of sodium polystyrenesulfonate, and 34.0 g of the seed particles-containing liquid were mixed with stirring at 32°C. 2.80 g of 3,4-ethylenedioxythiophene was added thereto, and these were mixed and emulsified with a homomixer ("ROBOMIX (registered trademark)", available from PRIMIX Corporation; 4000 rpm; hereinafter, the same is applied) for 30 minutes, giving a monomer liquid 1 (seed particles present) (per mol of 3,4-ethylenedioxythiophene, 1.9 mol of sodium sulfonate group in the total amount of sodium polystyrenesulfonate used).

### <Production of polymer-containing liquid>

291.5 g of the monomer liquid 1 was placed into a stainless steel vessel connected to a high shear mixer ("MILDER (registered trademark) MDN303V", available from Co,. Ltd.; 5000 rpm, 32°C) and a circulation pump, and was stirred with a stirring blade and a high shear mixer while being circulated. Then, 5.89 g of sodium peroxodisulfate and 6.88 g of a 1% by mass aqueous solution of iron(III) sulfate hexahydrate were added, and a polymerization reaction was performed for 24 hours to obtain a polymer-containing liquid (the total amount of sodium polystyrenesulfonate relative to 100 parts by mass of the polymer: 261 parts by mass).

### <Preparation of dispersion (a)>

A polymer-containing liquid (solids content: 5.80% by mass) was diluted with pure water into 1500 mL (solids content: 4.73% by mass). Subsequently, the polymer-containing liquid was subjected to the first dispersion treatment for 45 minutes (the first time) with a high pressure homogenizer ("TwinPanda 600", available from Niro Soavi; 400 bar (40 MPa); hereinafter, the same is applied).

Further, pure water was added to dilute the polymer-containing liquid to adjust the solids content to 3.99% by mass. 1500 mL of the diluted polymer-containing liquid was subjected to the first dispersion treatment (the second time) for 135 minutes with the high pressure homogenizer.

Next, the polymer-containing liquid was desalted by ion exchange with 125.6 mL of a cation exchange resin and 109.9 mL of an anion exchange resin for 3 hours, giving a dispersion (a) (pH: 1.9).

### <Production of dispersion (b)>

10 g of morpholine and pure water were added to the dispersion (a) to adjust the solids content to 1.6% by mass and the pH to 4.7. As an electric conductivity improver, 25 parts by mass (15.6 parts by mass per 1 part by mass of solids in the dispersion (a)) of diethylene glycol was added relative to 100 parts by mass of the diluted dispersion (a). Subsequently, the liquid was subjected to the second dispersion treatment for 60 minutes with a high pressure homogenizer, giving a dispersion (b) (solids content: 1.28% by mass, pH: 4.7).

### [Example 2]

A dispersion (b) was produced in the same manner as in Example 1 except that the amount of diethylene glycol added relative to 100 parts by mass of the dispersion (a) having a solids content of 1.6% by mass in the dispersion (b) in Example 1 was 15 parts by mass (9.4 parts by mass per 1 part by mass of solids in the dispersion (a)).

### [Example 3]

A dispersion (b) was produced in the same manner as in Example 1 except that diethylene glycol in production of the dispersion (b) in Example 1 was replaced by ethylene glycol.

### [Examples 4 to 6]

Dispersions (b) were produced in the same manner as in Example 2 except that diethylene glycol in production of the dispersion (b) in Example 2 was replaced by triethylene glycol and the time for the second dispersion treatment was varied as shown in Table 1.

### [Comparative Examples 1 to 4]

Dispersions (b') in Comparative Examples 1 to 4 were produced in the same manner as in Example 1 except that the second dispersion treatment with a high pressure homogenizer in production of the dispersions (b) in Examples 1 to 3 and 5 was not performed.

### [Example 7]

The seed particles-containing liquid in Example 1 was not produced, and a monomer liquid 2 not containing seed particles was produced as follows.

In a 1-L vessel made of polyethylene, 225.7 g of pure water and 63.0 g of a 12% by mass aqueous solution of sodium polystyrenesulfonate were mixed with stirring at 32°C. 2.80 g of 3,4-ethylenedioxythiophene was added thereto, and these were mixed and emulsified with a homomixer for 30 minutes, giving a monomer liquid 2 (seed particles absent) (per mol of 3,4-ethylenedioxythiophene, 2.0 mol of sodium sulfonate group in the total amount of sodium polystyrenesulfonate used).

A dispersion (b) was produced (diethylene glycol per 1 part by mass of solids in the dispersion (a): 15.6 parts by mass) in the same manner as in Example 1 except that the monomer liquid 1 in production of the polymer-containing liquid in Example 1 was replaced by the monomer liquid 2.

### [Example 8]

A dispersion (b) was produced in the same manner as in Example 7 except that the amount of diethylene glycol added in production of the dispersion (b) in Example 7 was changed to 9.4 parts by mass per 1 part by mass of solids in the dispersion (a).

### [Comparative Examples 5 and 6]

Dispersions (b') in Comparative Example 5 and 6 were produced in the same manner as in Example 7 except that the second dispersion treatment with the high pressure homogenizer in production of the dispersions (b) in Examples 7 and 8 was not performed.

### [Production of solid electrolytic capacitor sample]

Using the dispersions (b) and the dispersions (b') in Examples and Comparative Examples above, solid electrolytic capacitor samples were produced as follows.

Under an air atmosphere, porous anode bodies for an aluminum electrolytic capacitor element (withstand voltage: 35 V, designed capacitance: 400 µF) were impregnated with the dispersions (b) and the dispersions (b'), respectively, at 25°C for 5 minutes, and then were dried with a hot air dryer ("ST-110", available from ESPEC Corp.) at 120°C for 30 minutes, giving solid electrolytic capacitor samples each including a solid electrolyte layer on the surface of the dielectric oxide film of the porous anode body.

The solid electrolytic capacitor samples were measured for capacitance [µF] at 120 Hz and equivalent series resistance (ESR) [mΩ] at 100 kHz and 120 Hz using a precision LCR meter ("E4980A", available from Agilent Technologies, Inc.).

The results of these measurements are shown in Table 1.

**Table 1**

| | Seed particle | Electric conductivity improver | Amount added ^{*1} [parts by mass] | Time for second dispersion treatment [min] | Capacitance [µF] | ESR [mΩ] | |
|---|---|---|---|---|---|---|---|
| | | | | | | 100 kHz | 120 Hz |
| Example 1 | Present | Diethylene glycol | 15.6 | 60 | 422 | 11.2 | 148 |
| Comparative Example 1 | | | | - | 405 | 11.9 | 164 |
| Example 2 | Present | Diethylene glycol | 9.4 | 60 | 386 | 13.4 | 249 |
| Comparative Example 2 | | | | - | 365 | 13.9 | 268 |
| Example 3 | Present | Ethylene glycol | 15.6 | 60 | 351 | 16.0 | 430 |
| Comparative Example 3 | | | | - | 300 | 19.8 | 548 |
| Example 4 | Present | Triethylene glycol | 9.4 | 30 | 368 | 12.7 | 237 |
| Example 5 | | | | 60 | 384 | 11.5 | 188 |
| Example 6 | | | | 120 | 386 | 11.3 | 175 |
| Comparative Example 4 | | | | - | 351 | 13.0 | 317 |
| Example 7 | Absent | Diethylene glycol | 15.6 | 60 | 421 | 10.4 | 123 |
| Comparative Example 5 | | | | - | 347 | 11.0 | 317 |
| Example 8 | Absent | Diethylene glycol | 9.4 | 60 | 420 | 11.4 | 163 |
| Comparative Example 6 | | | | - | 342 | 12.0 | 344 |

| | | | | | | | |
|---|---|---|---|---|---|---|---|
| (Note) * 1: per 1 part by mass of solids in the dispersion (a) | | | | | | | |

The results shown in Table 1 revealed that when the dispersions (b) obtain by adding the electric conductivity improver and performing the second dispersion treatment (Examples 1 to 8) were used, solid electrolytic capacitors having a capacitance increased by 4% or more and a reduced ESR were produced compared to the cases where the dispersions (b') produced without performing the second dispersion treatment were used (Comparative Examples 1 to 6).

Comparison between Comparative Example 4 and Examples 4 to 6 shows that a longer time for the second dispersion treatment will result in solid electrolytic capacitors having a larger capacitance and a lower ESR. Since degrees of an increase in capacitance and a reduction in ESR in Example 6 were not large than those in Example 5, it can be said that 60 minutes is enough as the time for the second dispersion treatment in consideration of production efficiency of the polymer dispersion.

## Claims

1. A method for producing a polymer dispersion for a solid electrolytic capacitor, comprising:
a step (1) of polymerizing a monomer as a constitutional unit of a conjugated conductive polymer in a liquid containing at least one of a seed particle with protective colloid formed of a polyanion and a polyanion to obtain a polymer-containing liquid;
a step (2) of performing a first dispersion treatment on the polymer-containing liquid to obtain a dispersion (a); and
a step (3) of adding an electric conductivity improver to the dispersion (a), and performing a second dispersion treatment to obtain a dispersion (b).

2. The method for producing a polymer dispersion for a solid electrolytic capacitor according to claim 1, wherein the electric conductivity improver is one or more selected from the group consisting of tetrahydrofuran, γ-butyrolactone, N-methylformamide, N-methylpyrrolidone, ethylene glycol, propylene glycol, glycerol, diethylene glycol, triethylene glycol, dimethyl sulfoxide, and sorbitol.

3. The method for producing a polymer dispersion for a solid electrolytic capacitor according to claim 1 or 2, wherein an amount of the electric conductivity improver added is 1 to 30 parts by mass per 1 part by mass of solids in the dispersion (a).

4. The method for producing a polymer dispersion for a solid electrolytic capacitor according to any one of claims 1 to 3, wherein in the step (3), an alkaline compound is further added.

5. The method for producing a polymer dispersion for a solid electrolytic capacitor according to claim 4, wherein the alkaline compound is one or more selected from the group consisting of morpholine, 4-ethylmorpholine, and 4-(2-hydroxyethyl)morpholine.

6. The method for producing a polymer dispersion for a solid electrolytic capacitor according to any one of claims 1 to 5, wherein the monomer as the constitutional unit of the conjugated conductive polymer contains one or more compounds selected from the group consisting of pyrroles, anilines, and thiophenes.

7. The method for producing a polymer dispersion for a solid electrolytic capacitor according to claim 6, wherein the thiophene compounds are represented by the following formula (1): 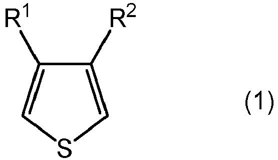 wherein R¹ and R² are each independently a hydrogen atom, a hydroxyl group, an alkyl group with 1 to 18 carbon atoms containing or not containing a substituent, an alkoxy group with 1 to 18 carbon atoms containing or not containing a substituent, an alkylthio group with 1 to 18 carbon atoms containing or not containing a substituent, or R² and R³ may bind to each other to form an alicycle with 3 to 10 carbon atoms containing or not containing a substituent, an aromatic ring with 6 to 10 carbon atoms containing or not containing a substituent, an oxygen atom-containing hetero ring with 2 to 10 carbon atoms containing or not containing a substituent, a sulfur atom-containing hetero ring with 2 to 10 carbon atoms containing or not containing a substituent, or a sulfur and oxygen atom-containing hetero ring with 2 to 10 carbon atoms containing or not containing a substituent.

8. The method for producing a polymer dispersion for a solid electrolytic capacitor according to any one of claims 1 to 7, wherein the polyanion is a polymer having two or more groups composed of sulfonic acid or a salt thereof.

9. The method for producing a polymer dispersion for a solid electrolytic capacitor according to any one of claims 1 to 8, wherein a proportion of an anionic group in the polyanion is from 0.25 to 30 mol based on 1 mol of the monomer as the constitutional unit of the conjugated conductive polymer.

10. The method for producing a polymer dispersion for a solid electrolytic capacitor according to any one of claims 1 to 9, wherein in the step (1), the monomer as the constitutional unit of the conjugated conductive polymer is polymerized in a liquid containing water using an oxidant containing one or more selected from the group consisting of peroxodisulfuric acid and salts thereof.

11. A method for producing a solid electrolytic capacitor, comprising:
a step (4) of attaching the polymer dispersion for a solid electrolytic capacitor obtained by the method according to any one of claims 1 to 10 to a porous anode body made of a valve metal and having a dielectric film on a surface thereof; and
a step (5) of removing the dispersion medium from the polymer dispersion for a solid electrolytic capacitor attached to the porous anode body to form a solid electrolyte layer.
